# FASCICULE DE BREVET EUROPEEN

(11) **EP 2 567 615 B1**
(45) Date de publication et mention de la délivrance du brevet: **11.02.2015**
(21) Numéro de dépôt: 12183563.1
(22) Date de dépôt: 07.09.2012
(51) Int. Cl.: A01K 85/02

(54) **Systeme de peche comprenant un leurre et appat comprenant un tel systeme de peche**
Angelsystem und Köder, der ein solches Angelsystem umfasst
Fishing system and lure including such a fishing system

(30) Priorité: 09.09.2011 FR 1158054
(43) Date de publication de la demande: 13.03.2013
(73) Titulaire: Institut De Recherche Pour Le Développement (IRD), 13002 Marseille 2 (FR)
(72) Inventeur: Bach, Pascal, 97460 SAINT-PAUL (FR); Robin, Jean-Jacques, 34830 CLAPIERS (FR); Hodent, Timothée, 13100 AIX EN PROVENCE (FR)
(74) Mandataire: Cabinet Plasseraud

(56) Documents cités:
- JP-A- 2005 237 355
- US-A- 4 144 665
- US-A1- 2003 192 227
- US-B1- 6 266 916

## Description

L'invention se rapporte à un système de pêche et à un appât comprenant un tel système de pêche.

L'invention s'applique, en particulier, à la pêche palangrière de grands poissons pélagiques, tels que des thons ou des espadons.

L'invention se rapporte à un système de pêche du type comprenant :
- une ligne de pêche,
- au moins un hameçon comprenant une hampe adaptée pour être fixée à la ligne de pêche, et une courbure terminée par une pointe,
- au moins un leurre comprenant une enveloppe, ladite enveloppe délimitant un logement adapté pour recevoir un appétant, et un compartiment présentant une longueur qui correspond à une longueur de la hampe de l'hameçon, ledit compartiment étant ouvert sur toute sa longueur et adapté pour retenir par friction et de façon libérable la hampe de l'hameçon en laissant dépasser au moins une partie de la courbure de l'hameçon comprenant la pointe. Un tel système de pêche est connu de US-A-6 266 916.

Des systèmes de pêche connus de ce type utilisés dans des applications à la pêche récréative sont décrits dans les documents US 6 266 916 et JP 2005 237355.

Toutefois, dans ces systèmes de pêche connus, l'hameçon est solidaire du leurre, ce qui impose des contraintes en termes de résistance pour le leurre et limite les possibilités d'adaptation de la forme et du matériau du leurre, notamment pour en améliorer la manipulation. De plus, dans les systèmes de pêche connus, les leurres sont rapidement détériorés et doivent fréquemment être remplacés. Ces systèmes de pêche ne sont pas adaptés pour la pêche palangrière pélagique.

L'invention vise à pallier les problèmes évoqués ci-dessus.

A cet effet, l'invention propose un système de pêche du type précité dans lequel le leurre est monté coulissant le long de la ligne de pêche et en ce que la hampe de l'hameçon est fixée à la ligne de pêche au travers du leurre, l'hameçon étant déplaçable par rapport au leurre entre une première position, dans laquelle la hampe est retenue par friction et de façon libérable dans le compartiment en laissant dépasser au moins une partie de la courbure comprenant la pointe, et une deuxième position, dans laquelle l'hameçon est placé en dehors du compartiment.

Ainsi, l'hameçon peut être retenu dans le leurre pour réaliser une capture d'un poisson puis être dégagé du leurre une fois la capture réalisée. Ces dispositions limitent les contraintes en termes de résistance pour le leurre et augmente les possibilités d'adaptation de la forme et du matériau du leurre, notamment pour en améliorer la manipulation. Le leurre selon l'invention est libéré de l'hameçon lorsqu'un poisson est capturé et les efforts exercés sur l'hameçon sont directement transmis à la ligne de pêche et non pas au leurre. Cette possibilité de libération du leurre le long de la ligne de pêche réduit sa détérioration et améliore sa longévité.

En particulier, le compartiment du leurre peut comprendre deux surfaces intérieures s'étendant sur la longueur du compartiment, en regard l'une de l'autre et adaptées pour venir en contact de part et d'autre de la hampe.

L'enveloppe du leurre peut être allongée selon un axe longitudinal.

Le compartiment peut s'étendre selon l'axe longitudinal.

L'enveloppe du leurre peut également présenter un plan longitudinal médian comprenant l'axe longitudinal, le compartiment étant ouvert selon une direction transversale perpendiculaire au plan longitudinal médian.

Dans un mode de réalisation, l'enveloppe du leurre peut comprendre une partie antérieure et une partie postérieure attenantes selon l'axe longitudinal, la partie antérieure comportant le logement pour l'appétant et la partie postérieure comportant le compartiment pour l'hameçon.

Par ailleurs, la partie postérieure du leurre peut comprendre au moins deux carènes symétriques s'étendant sensiblement dans un plan horizontal médian comprenant l'axe longitudinal de l'enveloppe. Ces carènes permettent au leurre de se maintenir dans une position horizontale reproduisant la position d'un poisson évoluant dans l'eau.

L'enveloppe du leurre peut présenter une surface extérieure et le compartiment peut présenter une surface intérieure, l'enveloppe comportant un passage faisant communiquer la surface intérieure du compartiment et la surface extérieure de l'enveloppe, ledit passage étant adapté pour recevoir de manière coulissante la ligne de pêche.

En particulier, pour faciliter le maintien du leurre dans la position horizontale, le passage peut être ménagé dans une portion sensiblement centrale de l'enveloppe et déboucher sur une surface supérieure de l'enveloppe.

En outre, le passage peut comprendre un premier orifice mettant en communication le logement avec la surface extérieure de l'enveloppe et un deuxième orifice mettant en communication le logement avec le compartiment.

L'enveloppe du leurre peut être monobloc, en matériau élastiquement déformable.

L'enveloppe du leurre peut alors comporter au moins une rainure délimitée par deux bords libres en regard l'un de l'autre, lesdits bords libres étant élastiquement déformables pour permettre un passage de l'appétant dans le logement. De telles dispositions permettent de simplifier le remplissage du logement par l'appétant et d'en éviter la perte par une fermeture automatique de la rainure.

Pour permettre la diffusion de l'appétant, au moins une partie de l'enveloppe comportant le logement peut être ajourée.

L'enveloppe du leurre peut présenter des extrémités avant et arrière, l'enveloppe du leurre comportant au moins un trou placé à l'extrémité avant et permettant l'écoulement de l'eau entre le logement et l'extérieur. Cette disposition permet d'assurer une circulation et un écoulement d'eau dans le logement en vue de réaliser un auto-nettoyage du leurre lors de la remontée de ligne et une évacuation complète de l'eau dans l'enveloppe, et ce, quelle que soit la position dans laquelle se trouve le leurre.

Selon un autre aspect, l'invention propose un appât comprenant un système de pêche tel que défini précédemment, et un appétant placé dans le logement du leurre.

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :
- la figure 1 est une représentation en perspective d'un système de pêche selon un premier mode de réalisation de l'invention, le système de pèche comprenant un leurre, un hameçon et une ligne de pêche, l'hameçon étant dans une première position, dans laquelle une hampe de l'hameçon est retenue par friction et de façon libérable dans un compartiment du leurre en laissant dépasser une partie d'une courbure comprenant une pointe,
- la figure 2 est une représentation en perspective du système de pêche de la figure 1, illustrant l'hameçon dans une deuxième position, dans laquelle l'hameçon est placé en dehors du compartiment, la hampe de l'hameçon étant fixée à la ligne de pêche au travers du leurre, le leurre pouvant coulisser le long de la ligne de pêche,
- la figure 3 est une représentation en vue de dessus du système de pêche de la figure 1,
- la figure 4 est une représentation en vue de dessous du système de pêche de la figure 1,
- la figure 5 est une représentation en coupe selon l'orientation référencée V-V sur la figure 1 du système de pêche de la figure 1,
- la figure 6 est une représentation en coupe selon l'orientation référencée VI-VI sur la figure 1 du système de pêche de la figure 1,
- la figure 7 est une représentation en perspective d'un système de pêche selon un deuxième mode de réalisation de l'invention, l'hameçon étant dans la première position, dans laquelle la hampe est retenue par friction et de façon libérable dans le compartiment du leurre en laissant dépasser la pointe,
- la figure 8 est une représentation en perspective du système de pêche de la figure 7, illustrant l'hameçon dans la deuxième position, dans laquelle l'hameçon est placé en dehors du compartiment, la hampe de l'hameçon étant fixée à la ligne de pêche au travers du leurre, le leurre pouvant coulisser le long de la ligne de pêche,
- la figure 9 est une représentation en vue de dessus du système de pêche de la figure 7,
- la figure 10 est une représentation en vue de dessous du système de pêche de la figure 7,
- la figure 11 est une représentation en coupe selon l'orientation référencée XI-XI sur la figure 7 du système de pêche de la figure 7.

Sur les figures, les mêmes références désignent des éléments identiques ou analogues.

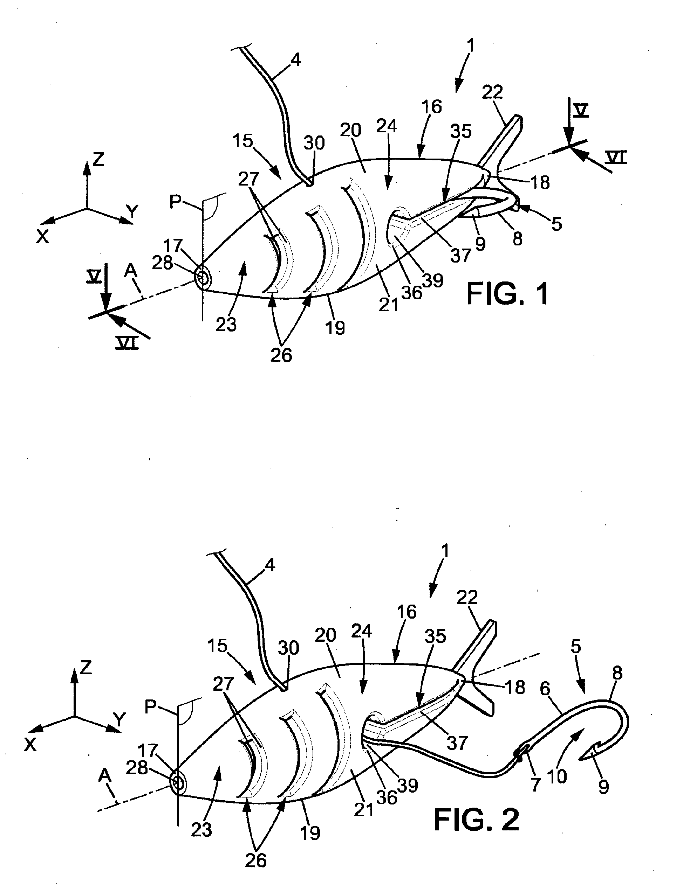

Les figures 1 et 2 représentent un premier mode de réalisation d'un système de pêche 1 pouvant notamment être utilisé dans la pêche palangrière pour capturer de grands poissons pélagiques dont le poids peut varier de 20 kg à 200 kg, tels que des thons ou des espadons.

Le système de pêche 1 comprend un ou plusieurs hameçons 5 montés sur une ligne de pêche. Dans l'application particulière à la pêche palangrière, les hameçons 5, par exemple au nombre de 500 à 3000, sont fixés à des avançons 4 ou bas de ligne régulièrement disposés le long d'une ligne-mère, non représentée, dont la longueur peut être comprise entre 15 km et 120 km. Les avançons 4 sont, par exemple, constitués par des mono-filaments en nylon de l'ordre de 2 mm de diamètre et la ligne-mère est, par exemple, constituée par un mono-filament en nylon de l'ordre de 3 mm à 4 mm de diamètre.

Chacun des hameçons 5 comprend une hampe 6, globalement rectiligne, terminée d'un côté par un oeillet 7 annulaire de fixation à l'avançon 4, et de l'autre côté par une courbure 8 présentant une pointe 9 et une ouverture 10.

Le système de pêche 1 comprend un leurre 15 pour chaque hameçon 5.

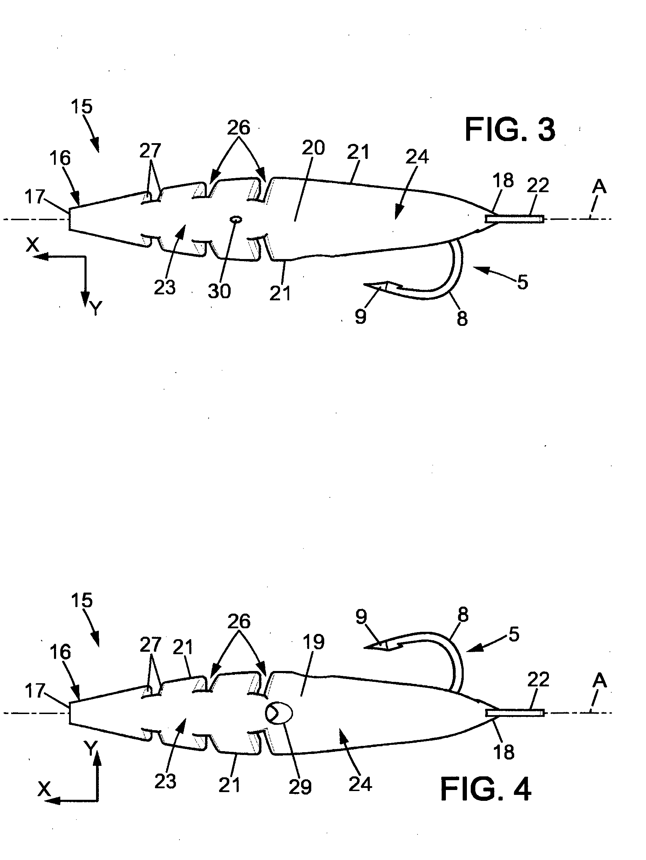

Le leurre 15 comprend une enveloppe 16 qui, dans le mode de réalisation représenté, a une forme générale ovoïdale ou ellipsoïdale, et est réalisée de façon monobloc, c'est-à-dire en une seule pièce, par exemple par moulage par injection d'un matériau élastiquement déformable, tel que du polyuréthane. L'enveloppe 16 est alors allongée selon un axe longitudinal A, parallèle à une direction longitudinale X, entre des extrémités avant 17 et arrière 18. L'enveloppe 16 présente des portions inférieure 19 (visible sur la figure 4) et supérieure 20 (visible sur la figure 3) s'étendant à distance l'une de l'autre selon une direction verticale Z perpendiculaire à la direction longitudinale X, entre les extrémités avant 17 et arrière 18. L'enveloppe 16 présente également des portions latérales 21 (dont l'une est visible sur les figures 1 et 2) de part et d'autre d'un plan longitudinal médian P comprenant l'axe longitudinal A et s'étendant selon la direction verticale Z. Les portions latérales 21 s'étendent entre les extrémités avant 17 et arrière 18 et relient entre elles les portions inférieure 19 et supérieure 20. L'enveloppe 16 présente une symétrie par rapport au plan longitudinal médian P et par rapport à un plan horizontal médian comprenant l'axe longitudinal A et s'étendant selon une direction transversale Y, perpendiculaire aux directions longitudinale X et verticale Z.

Comme il ressort des figures 1 et 2, l'enveloppe 16 a une forme générale de poisson, un élément 22 en forme de nageoire caudale étant, par exemple, fixé à l'extrémité arrière 18. L'enveloppe 16 présente, par ailleurs, une forme adaptée notamment pour faciliter la manipulation du leurre 15 et son rangement côte à côte avec d'autres leurres 15 identiques dans un bac.

L'enveloppe 16 comprend une partie antérieure 23 comprenant l'extrémité avant 17 et une partie postérieure 24 comprenant l'extrémité arrière 18, les parties antérieure 23 et postérieure 24 étant attenantes selon l'axe longitudinal A.

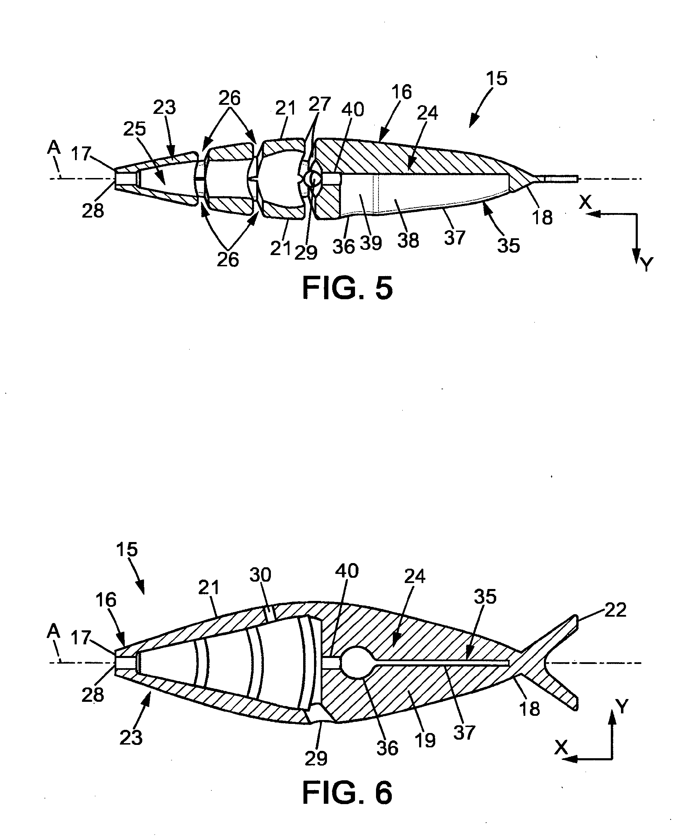

La partie antérieure 23, qui s'étend sensiblement sur une première moitié d'une longueur mesurée selon l'axe longitudinal A de l'enveloppe 16, est creuse et délimite un logement 25, visible sur les figures 5 et 6, adapté pour recevoir un appétant. Pour une application à la pêche palangrière pélagique, le logement 25 peut avantageusement présenter un volume supérieur à 10 cm³ et notamment compris entre 10 cm³ et 20 cm³, par exemple de 15 cm³. Un tel volume permet au logement 25 de recevoir un appétant constitué de produits non transformés ou ayant subi une transformation minimale, tels que des morceaux de poisson ou de la chair broyée.

En particulier, la partie antérieure 23 de l'enveloppe 16 est ajourée pour mettre en communication le logement 25 avec l'extérieur et assurer la diffusion olfactive de l'appétant au travers de l'enveloppe 16. Dans le mode de réalisation représenté, la partie antérieure 23 comporte trois rainures 26 parallèles formées sur chacune des portions latérales 21. Chacune des rainures 26 est délimitée par deux bords libres 27 en regard l'un de l'autre. Du fait de leur nature élastiquement déformable, les bords libres 27 de chaque rainure 26 peuvent être écartés pour permettre le passage d'un appétant, par exemple sous forme de cartouche de pulpe, dans le logement 25 en vue de former un appât.

Pour que de l'eau puisse circuler dans le logement 25, en vue de favoriser la diffusion olfactive de l'appétant et de permettre la réalisation d'un auto-nettoyage du logement 25 lorsque la ligne de pêche est remontée, l'enveloppe 16 comporte un premier trou 28 d'écoulement d'eau traversant l'enveloppe 16, placé à l'extrémité avant 17 et un deuxième trou 29 d'écoulement d'eau traversant l'enveloppe 16, placé sur la portion inférieure 19. En variante, un seul trou d'écoulement d'eau ou plus de deux trous d'écoulement d'eau avec des agencements appropriés pourraient être prévus pour mettre en communication le logement 25 avec l'extérieur.

La partie postérieure 24, qui s'étend sensiblement sur une deuxième moitié d'une longueur mesurée selon l'axe longitudinal A de l'enveloppe 16, est pleine et comporte un compartiment 35 s'étendant, dans le mode de réalisation représenté, selon l'axe longitudinal A. Le compartiment 35 présente une ouverture selon la direction transversale Y sur toute une longueur du compartiment 35 mesurée selon l'axe longitudinal A.

En particulier, le compartiment 35 a une forme adaptée pour recevoir la hampe 6 de l'hameçon 5. A cet égard, la longueur du compartiment 35 correspond à une longueur de la hampe 6 de l'hameçon 5. En outre, le compartiment 35 comporte un trou borgne 36 s'étendant selon la direction transversale Y, ménagé au voisinage de la partie antérieure 23 de l'enveloppe 16, et une gorge 37 s'étendant depuis le trou borgne 36 vers l'extrémité arrière 18 de l'enveloppe 16, selon la direction longitudinale X. Le trou borgne 36 et la gorge 37 sont adaptés pour loger respectivement l'oeillet 7 et le reste de la hampe 6 de l'hameçon 5. La gorge 37 a deux surfaces intérieures 38 en regard l'une de l'autre et écartées l'une de l'autre d'une distance mesurée selon la direction verticale Z correspondant sensiblement à une épaisseur de la hampe 6 de l'hameçon 5 pour pouvoir venir en contact de part et d'autre de la hampe 6. Par ailleurs, la gorge 37 a une profondeur mesurée selon la direction transversale Y inférieure à l'ouverture 10 de l'hameçon 5. En variante, la gorge 37 pourrait présenter un fond ouvert selon la direction transversale Y pour permettre à la gorge d'accueillir diverses formes d'hameçon et améliorer l'adaptabilité du compartiment à différents hameçons. De même, le trou borgne 36 peut avoir une surface intérieure 39 annulaire adaptée pour venir en contact avec l'oeillet 7.

Pour permettre le passage de l'avançon 4 comme il apparaîtra de la suite de la description, l'enveloppe 16 comprend un passage faisant communiquer la surface extérieure de l'enveloppe 16 et la surface intérieure du compartiment 35. Pour favoriser le maintien du leurre 15 dans une position horizontale correspondant à celle d'un poisson nageant dans l'eau, le passage est de préférence ménagé dans une portion centrale de l'enveloppe 16, sensiblement à équidistance des extrémités avant 17 et arrière 18, et débouche dans une surface supérieure de l'enveloppe 16. En particulier, le passage comprend un premier orifice 30 traversant l'enveloppe 16, de manière sensiblement centrale sur la portion supérieure 20, pour mettre en communication le logement 25 avec la surface extérieure de l'enveloppe 16. II comprend un deuxième orifice 40 ménagé dans la surface intérieure 39 du trou borgne 36 pour mettre en communication le compartiment 35 et le logement 25. Les premier 30 et deuxième 40 orifices sont dimensionnés pour permettre le passage et le coulissement de l'avançon 4. L'avançon 4 peut ainsi être introduit dans le logement 25 par le premier orifice 30 puis dans le compartiment 35 par le deuxième orifice 40. L'oeillet 7 de l'hameçon 5 peut alors être fixé directement à l'avançon 4 au travers du leurre 15.

Comme représenté sur la figure 1, l'hameçon 5 peut être monté dans le leurre 15 dans une première position adaptée pour réaliser la capture d'un poisson. Dans cette position, l'oeillet 7 de la hampe 6 de l'hameçon 5 est placé dans le trou borgne 36 du compartiment 35 et le reste de la hampe 6 est placée dans la gorge 37, avec la courbure 8 tournée vers l'extérieur. Du fait de la forme et des dimensions de la gorge 37 et du trou borgne 36 et du matériau de l'enveloppe 16, la hampe 6 de l'hameçon 5 peut être retenue par friction et de façon libérable dans le compartiment 35, avec une partie de la courbure 8 de l'hameçon 5 comprenant la pointe 9 s'étendant au travers de l'ouverture du compartiment 35 et dépassant du compartiment 35.

Lorsqu'une traction suffisante pour vaincre les frottements entre l'hameçon 5 et le compartiment 35 est exercée sur l'hameçon 5 par un poisson, l'hameçon 5 est dégagé du compartiment 35. Dans cette deuxième position représentée sur la figure 2, l'hameçon 5 est en dehors du compartiment 25 et le leurre 15 peut coulisser le long de l'avançon 4.

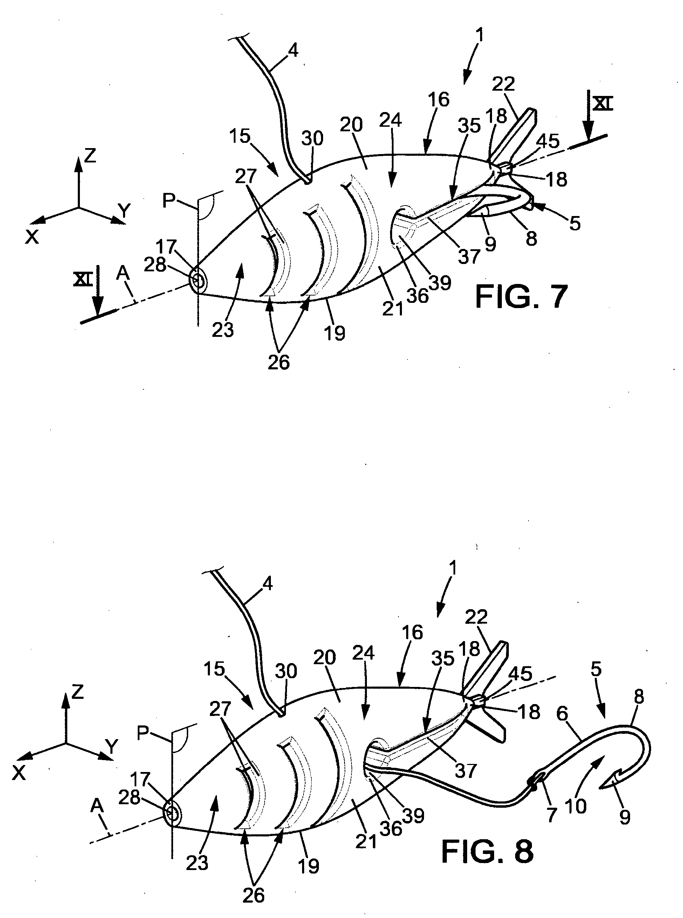

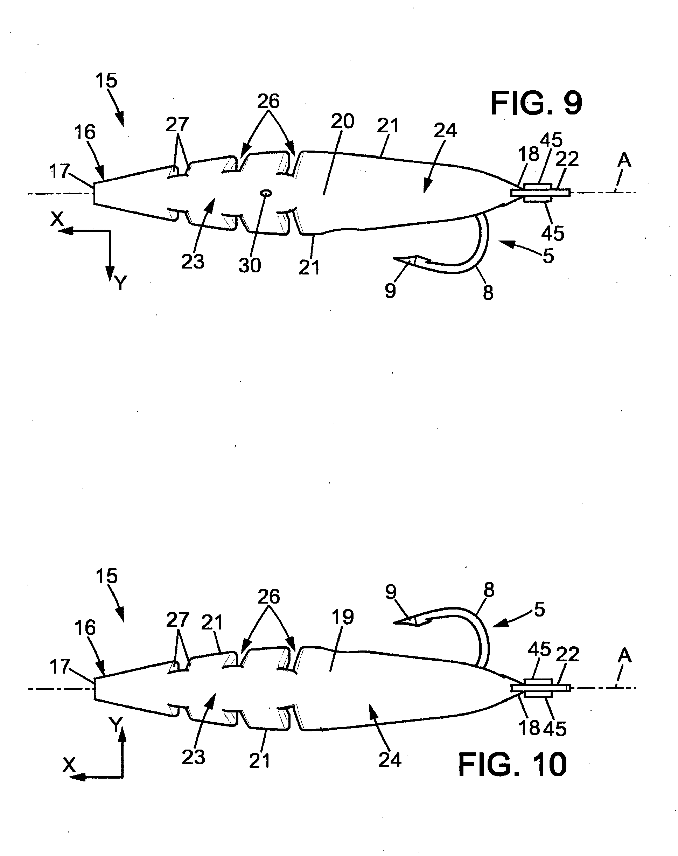

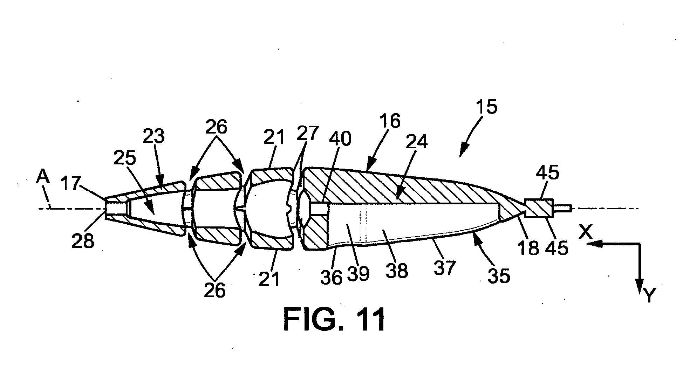

Les figures 7 à 11 représentent un deuxième mode de réalisation du système de pêche 1. Ce deuxième mode de réalisation diffère du premier mode de réalisation principalement en ce qu'il comprend deux carènes 45 horizontales symétriques situées dans la partie postérieure de l'enveloppe.

Les carènes 45 servent à assurer le maintien du leurre 15 dans la position horizontale. Elles se présentent sous la forme de saillies s'étendant dans le plan horizontal médian, et présentant chacune des surfaces supérieure et inférieure parallèles entre elles. Les surfaces supérieures des carènes 45 sont coplanaires et les surfaces inférieures des carènes 45 sont coplanaires. En variante, les surfaces supérieure et inférieure de chaque carène 45 pourraient présenter une légère inclinaison en se rapprochant l'une de l'autre vers un bord libre de la carène 45 situé à distance de l'enveloppe 16. De plus, toute autre taille et tout autre agencement des carènes 45 sur l'enveloppe 16, en nombre approprié pouvant être supérieur à deux, pourraient être prévus.

Le deuxième mode de réalisation diffère également du premier mode de réalisation en ce que l'enveloppe 16 comporte uniquement le premier trou 28 d'écoulement d'eau traversant l'enveloppe 16, placé à l'extrémité avant 17. La diffusion olfactive de l'appétant et la réalisation de l'auto-nettoyage du logement 25 peuvent alors être réalisées entre le premier trou d'écoulement 26 et une ou plusieurs des rainures 26.

La description des autres caractéristiques du système de pêche selon le deuxième mode de réalisation, identiques à celles du premier mode de réalisation, ne sera pas reprise et l'on se référera à la description qui en a déjà été faite pour plus de détails.

## Revendications

1. Système de pêche (1) comprenant :
- une ligne de pêche (4),
- au moins un hameçon (5) comprenant une hampe (6) adaptée pour être fixée à la ligne de pêche (4), et une courbure (8) terminée par une pointe (9),
- au moins un leurre (15) comprenant une enveloppe (16), ladite enveloppe (16) délimitant un logement (25) adapté pour recevoir un appétant, et un compartiment (35) présentant une longueur qui correspond à une longueur de la hampe (6) de l'hameçon (5), ledit compartiment (35) étant ouvert sur toute sa longueur et adapté pour retenir par friction et de façon libérable la hampe (6) de l'hameçon (5) en laissant dépasser au moins une partie de la courbure (8) de l'hameçon (5) comprenant la pointe (9),
ledit système de pêche (1) étant **caractérisé en ce que** le leurre (15) est monté coulissant le long de la ligne de pêche (4) et **en ce que** la hampe (6) de l'hameçon (5) est fixée à la ligne de pêche (4) au travers du leurre (15), l'hameçon (5) étant déplaçable par rapport au leurre (15) entre une première position, dans laquelle la hampe (6) est retenue par friction et de façon libérable dans le compartiment (35) en laissant dépasser au moins une partie de la courbure (8) comprenant la pointe (9), et une deuxième position, dans laquelle l'hameçon (5) est placé en dehors du compartiment (35).

2. Système de pêche (1) selon la revendication 1, dans lequel le compartiment (35) du leurre (15) comprend deux surfaces intérieures (38) s'étendant sur la longueur du compartiment (35), en regard l'une de l'autre et adaptées pour venir en contact de part et d'autre de la hampe (6).

3. Système de pêche (1) selon la revendication 1 ou 2, dans lequel l'enveloppe (16) du leurre (15) est allongée selon un axe longitudinal (A).

4. Système de pêche (1) selon la revendication 3, dans lequel le compartiment (35) s'étend selon l'axe longitudinal (A).

5. Système de pêche (1) selon la revendication 3 ou 4, dans lequel l'enveloppe (16) du leurre (15) présente un plan longitudinal médian (P) comprenant l'axe longitudinal (A), le compartiment (35) étant ouvert selon une direction transversale (Y) perpendiculaire au plan longitudinal médian (P).

6. Système de pêche (1) selon l'une quelconque des revendications 3 à 5, dans lequel l'enveloppe (16) du leurre (15) comprend une partie antérieure (23) et une partie postérieure (24) attenantes selon l'axe longitudinal (A), la partie antérieure (23) comportant le logement (25) pour l'appétant et la partie postérieure (24) comportant le compartiment (35) pour l'hameçon (5).

7. Système de pêche (1) selon la revendication 6, dans lequel la partie postérieure du leurre (15) comprend au moins deux carènes symétriques s'étendant sensiblement dans un plan horizontal médian comprenant l'axe longitudinal (A) de l'enveloppe (16).

8. Système de pêche (1) selon l'une quelconque des revendications 1 à 7, dans lequel l'enveloppe (16) du leurre (15) présente une surface extérieure et le compartiment présente une surface intérieure, l'enveloppe (16) comportant un passage (30, 40) faisant communiquer la surface intérieure du compartiment et la surface extérieure de l'enveloppe (16), ledit passage étant adapté pour recevoir de manière coulissante la ligne de pêche (4).

9. Système de pêche (1) selon la revendication 8, dans lequel le passage est ménagé dans une portion sensiblement centrale de l'enveloppe (16) et débouche sur une surface supérieure de l'enveloppe (16).

10. Système de pêche (1) selon la revendication 8 ou 9, dans lequel le passage comprend un premier orifice (30) mettant en communication le logement (25) avec la surface extérieure de l'enveloppe (16) et un deuxième orifice (40) mettant en communication le logement (25) avec le compartiment (35).

11. Système de pêche (1) selon l'une quelconque des revendications 1 à 10, dans lequel l'enveloppe (16) du leurre est monobloc, en matériau élastiquement déformable.

12. Système de pêche (1) selon la revendication 11, dans lequel l'enveloppe (16) du leurre (15) comporte au moins une rainure (26) délimitée par deux bords libres (27) en regard l'un de l'autre, lesdits bords libres (27) étant élastiquement déformables pour permettre un passage de l'appétant dans le logement (25).

13. Système de pêche (1) selon l'une quelconque des revendications 1 à 12, dans lequel au moins une partie (23) de l'enveloppe (16) du leurre (15) comportant le logement (25) est ajourée.

14. Système de pêche (1) selon la revendication 13, dans lequel l'enveloppe (16) du leurre (15) présente des extrémités avant (17) et arrière (18), l'enveloppe (16) du leurre comportant au moins un trou (28, 29) placé à l'extrémité avant (17) et permettant l'écoulement de l'eau entre le logement (25) et l'extérieur.

15. Appât comprenant un système de pêche (1) selon l'une quelconque des revendications 1 à 14, et un appétant placé dans le logement (25) du leurre (15).

## Patentansprüche

1. Angelsystem (1) mit:
- einer Angelleine (4),
- mindestens einem Angelhaken (5), der einen an der Angelleine (4) anbringbaren Schaft (6) und einen mit einer Spitze (9) endenden gebogenen Abschnitt (9) aufweist, und
- mindestens einem Köder (15) mit einer Hülle (16), wobei die Hülle (16) eine geeignete Aufnahme (25) zum Unterbringen einer Lockspeise und eine Kammer (35) umgibt, die eine Länge hat, die der Länge des Schafts (6) des Angelhakens (5) entspricht, wobei die Kammer (35) über ihre gesamte Länge offen ist und konfiguriert ist, den Schaft (6) des Angelhakens (5) mittels Reibung und auf lösbare Weise zu halten und zugleich ein Herausragen mindestens eines die Spitze (9) aufweisenden Teils des gebogenen Abschnitts (8) des Angelhakens (5) zu erlauben,
wobei das Angelsystem (1) **dadurch gekennzeichnet ist, dass** der Köder (15) gleitend entlang der Angelleine (4) angebracht ist, und dadurch, dass der Schaft (6) des Angelhakens (5) über den Köder (15) an der Angelleine (4) befestigt ist, wobei der Angelhaken (5) bezüglich des Köders (15) verschiebbar ist zwischen einer ersten Position, in welcher der Schaft (6) mittels Reibung und auf lösbare Weise in der Kammer (35) gehalten wird und zugleich ein Herausragen mindestens eines die Spitze (9) aufweisenden Teils des gebogenen Abschnitts (8) erlaubt ist, und einer zweiten Position, in welcher der Angelhaken (5) außerhalb der Kammer (35) angeordnet ist.

2. Angelsystem (1) nach Anspruch 1, wobei die Kammer (35) des Köders (15) mindestens zwei sich gegenüberliegende und über die Länge der Kammer (35) sich erstreckende Innenflächen (38) aufweist, die konfiguriert sind, mit dem Schaft (6) an dessen beiden Seiten in Kontakt zu kommen.

3. Angelsystem (1) nach Anspruch 1 oder 2, wobei die Hülle (16) des Köders (15) eine längliche Form entlang einer Längsachse (A) hat.

4. Angelsystem (1) nach Anspruch 3, wobei die Kammer (35) sich entlang der Längsachse (A) erstreckt.

5. Angelsystem (1) nach Anspruch 3 oder 4, wobei die Hülle (16) des Köders (15) eine die Längsachse (A) enthaltende mediane Längsebene (P) aufweist und die Kammer (35) in einer transversalen Richtung (Y), die senkrecht zur medianen Längsebene (P) ist, offen ist.

6. Angelsystem (1) nach einem der Ansprüche 3 bis 5, wobei die Hülle (16) des Köders (15) einen vorderen Teil (23) und einen hinteren Teil (24) aufweist, die entlang der Längsachse (A) aneinander angrenzen, wobei der vordere Teil (23) die Aufnahme (25) für die Lockspeise aufweist und der hintere Teil (24) die Kammer (35) für den Angelhaken (5) aufweist.

7. Angelsystem (1) nach Anspruch 6, wobei der hintere Teil des Köders (15) mindestens zwei symmetrische Kiele aufweist, die sich im Wesentlichen in einer die Längsachse (A) der Hülle (16) enthaltenden medianen horizontalen Ebene erstrecken.

8. Angelsystem (1) nach einem der Ansprüche 1 bis 7, wobei die Hülle (16) des Köders (15) eine Außenfläche aufweist und die Kammer eine Innenfläche aufweist, wobei die Hülle (16) einen Durchlass (30,40) aufweist, der die Innenfläche der Kammer und die Außenfläche der Hülle (16) miteinander verbindet, wobei der Durchlass konfiguriert ist, die Angelleine (4) auf gleitende Weise aufzunehmen.

9. Angelsystem (1) nach Anspruch 8, wobei der Durchlass in einem im Wesentlichen zentralen Abschnitt der Hülle (16) ausgespart ist und an einer oberen Oberfläche der Hülle (4) mündet.

10. Angelsystem (1) nach Anspruch 8 oder 9, wobei der Durchlass eine die Aufnahme (25) mit der Außenfläche der Hülle (16) verbindende erste Öffnung (30) und eine die Aufnahme (25) mit der Kammer (35) verbindende zweite Öffnung (40) aufweist.

11. Angelsystem (1) nach einem der Ansprüche 1 bis 10, wobei die Hülle (16) des Köders einstückig ist und aus einem elastisch verformbaren Material besteht.

12. Angelsystem (1) nach Anspruch 11, wobei die Hülle (16) des Köders (15) mindestens eine Rille (26) aufweist, die von zwei sich gegenüberliegenden freien Rändern (27) begrenzt ist, die elastisch verformbar sind, um ein Einführen der Lockspeise in die Aufnahme (25) zu erlauben.

13. Angelsystem (1) nach einem der Ansprüche 1 bis 12, wobei mindestens ein die Aufnahme (25) aufweisender Teil (23) der Hülle (16) des Köders (15) perforiert ist.

14. Angelsystem (1) nach Anspruch 13, wobei die Hülle (16) des Köders (15) ein vorderes (17) und hinteres (18) Ende aufweist und die Hülle (16) des Köders (15) mindestens ein am vorderen Ende (17) angeordnetes Loch (28,29) aufweist, das das Strömen von Wasser zwischen der Aufnahme (25) und der äußeren Umgebung erlaubt.

15. Lockmittel, das ein Angelsystem (1) nach einem der Ansprüche 1 bis 14 und eine in der Aufnahme (25) des Köders (15) angeordnete Lockspeise aufweist.

## Claims

1. Fishing system (1) comprising:
- a fishing line (4),
- at least one hook (5) comprising a shank (6) designed to be attached to the fishing line (4) and a curve (8) terminated by a tip (9),
- at least one lure (15) comprising a casing (16), said casing (16) bounding a chamber (25) designed to receive a bait, and a compartment (35) having a length which corresponds to the length of the shank (6) of the hook (5), said compartment (35) being open across its entire length and designed to releasably retain the shank (6) of the hook (5) by friction with at least a part of the curve (8) of the hook (5) incorporating the tip (9) left exposed,
said fishing system (1) being **characterised in that** the lure (15) is mounted so as to slide along the fishing line (4) and **in that** the shank (6) of the hook (5) is attached to the fishing line (4) through the lure (15), the hook (5) being displaceable relative to the lure (15) between a first position in which the shank (6) is releasably retained by friction in the compartment (35) with at least a part of the curve (8) incorporating the tip (9) left exposed, and a second position in which the hook (5) is positioned outside the compartment (35).

2. Fishing system (1) as claimed in claim 1, in which the compartment (35) of the lure (15) comprises two internal surfaces (38) extending across the length of the compartment (35) facing one another and designed to come into contact with either side of the shank (6).

3. Fishing system (1) as claimed in claim 1 or 2, in which the casing (16) of the lure (15) is elongate along a longitudinal axis (A).

4. Fishing system (1) as claimed in claim 3, in which the compartment (35) extends along the longitudinal axis (A).

5. Fishing system (1) as claimed in claim 3 or 4, in which the casing (16) of the lure (15) has a median longitudinal plane (P) containing the longitudinal axis (A), the compartment (35) being open in a transverse direction (Y) perpendicular to the median longitudinal plane (P).

6. Fishing system (1) as claimed in any one of claims 3 to 5, in which the casing (16) of the lure (15) comprises an anterior part (23) and a posterior part (24) adjoining the longitudinal axis (A), the anterior part (23) constituting the chamber (25) for the bait and the posterior part (24) constituting the compartment (35) for the hook (5).

7. Fishing system (1) as claimed in claim 6, in which the posterior part of the lure (15) comprises at least two symmetrical streamlined portions extending substantially in a median horizontal plane containing the longitudinal axis (A) of the casing (16).

8. Fishing system (1) as claimed in any one of claims 1 to 7, in which the casing (16) of the lure (15) has an external surface and the compartment has an internal surface, the casing (16) having a passage (30, 40) providing a communication between the internal surface of the compartment and the external surface of the casing (16), said passage being designed to receive the fishing line (4) in a sliding arrangement.

9. Fishing system (1) as claimed in claim 8, in which the passage is disposed in a substantially central portion of the casing (16) and opens onto a top surface of the casing (16).

10. Fishing system (1) as claimed in claim 8 or 9, in which the passage has a first orifice (30) providing a communication between the chamber (40) and the external surface of the casing (16) and a second orifice (40) providing a communication between the chamber (25) and the compartment (35).

11. Fishing system (1) as claimed in any one of claims 1 to 10, in which the casing (16) of the lure (16) is of a monobloc design made from elastically deformable material.

12. Fishing system (1) as claimed in claim 11, in which the casing (16) of the lure (15) has at least one groove (26) bounded by two free edges (27) facing one another, said free edges (27) being elastically deformable to allow a passage for the bait into the chamber (25).

13. Fishing system (1) as claimed in any one of claims 1 to 12, in which at least a part (23) of the casing (16) of the lure (15) incorporating the chamber (25) is of an openwork design.

14. Fishing system (1) as claimed in claim 13, in which the casing (16) of the lure (15) has front (17) and rear (18) ends, the casing (16) of the lure having at least one hole (28, 29) positioned at the front end (17) and enabling water to flow between the chamber (25) and the outside.

15. Lure comprising a fishing system (1) as claimed in any one of claims 1 to 14 and a bait placed in the chamber (25) of the lure (15).
